**Europäisches Patentamt**

**European Patent Office**

**Office européen des brevets**

(19)

(11) Veröffentlichungsnummer: **0 135 002**
**B1**

(12) # EUROPÄISCHE PATENTSCHRIFT

(45) Veröffentlichungstag der Patentschrift:
**03.06.87**

(51) Int. Cl.⁴: **G 21 C 17/06, G 01 L 11/00**

(21) Anmeldenummer: **84108134.2**

(22) Anmeldetag: **11.07.84**

(54) **Verfahren zur zerstörungsfreien Bestimmung des Spaltgasdruckes in Kernbrennstäben.**

(30) Priorität: **25.07.83 DE 3326737**

(43) Veröffentlichungstag der Anmeldung:
**27.03.85 Patentblatt 85/13**

(45) Bekanntmachung des Hinweises auf die Patenterteilung:
**03.06.87 Patentblatt 87/23**

(84) Benannte Vertragsstaaten:
**BE CH DE FR GB LI SE**

(56) Entgegenhaltungen:
**DE - A - 3 117 446**
**FR - A - 2 299 633**
**FR - A - 2 349 832**
**FR - A - 2 491 206**
**FR - A - 2 508 639**

**PATENTS ABSTRACTS OF JAPAN, Band 2, Nr. 50, 10. April 1978, Seite 470M78; & JP - A - 53 11295 (MITSUBISHI DENKI K.K.) 01.02.1978**
**PATENTS ABSTRACTS OF JAPAN, Band 6, Nr. 79(P-115)(957), 18. Mai 1982, Seite 957P115; & JP - A - 57 16327 (HITACHI SEISAKUSHO K.K.) 27.01.1982**
**KERNTECHNIK, Band 19, Nr. 9/10, September/Oktober 1977, Seiten 433-444, München, DE; B.-G. BRODDA et al.: "Fernbediente und rechnergestützte Präparationsstrecke für**

(73) Patentinhaber: **KRAFTWERK UNION AKTIENGESELLSCHAFT, Wiesenstrasse 35, D-4330 Mülheim (Ruhr) (DE)**

(72) Erfinder: **Würtz, Rüdiger, Dr. Dipl.-Chem., Schurzstrasse 20, D-8750 Aschaffenburg (DE)**

(74) Vertreter: **Mehl, Ernst, Dipl.-Ing. et al, Postfach 22 01 76, D-8000 München 22 (DE)**

(56) Entgegenhaltungen: (Fortsetzung)
**Röntgenfluoreszenz-Messproben einer Kernbrennstoff-Wiederaufarbeitungsanlage"**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur zerstörungsfreien Bestimmung des Spaltgasdruckes in Kernbrennstäben, bestehend aus einem an beiden Enden verschlossenen Hüllrohr und einer von diesem umschlossenen Brennstoffsäule, wobei am oberen Ende des Brennstabes ein Spaltgasraum vorhanden ist, der hauptsächlich Xenon enthält.

Die Erfindung betrifft auch eine Einrichtung zur Ausübung dieses Verfahrens.

Nach der DE-A-3 117 446 wird der von Spaltgasen verursachte Druck in Testbrennstäben mechanisch gemessen. Zu diesem Zweck ist unmittelbar über dem unteren Endstopfen, der zum Abschluss des Hüllrohres verwendet wird, eine Druckmessdose vorgesehen. Sie kann aus einem geschlossenen Faltenbalg bestehen, in dem sich beim Anstieg des Brennstabinnendruckes ein Ferritkern axial verlagert. Bei Abfall des Innendruckes kehrt der Faltenbalg in seine durch eine Anschlagfläche genau definierte Ausgangslage zurück. Dies wird zur Leckerkennung herangezogen. Eine derartige barometrische Erfassung ist jedoch wegen der notwendigen Zusatzeinbauten nur in Teststäben, nicht jedoch in Standardbrennstäben aus Leistungsreaktoren möglich. Ausgehend von dem Problem der Verifizierung der Brennstabauslegung bei höheren Abbränden und bei Leistungstransienten von Standardkernbrennstäben wird eine Messmethode zur Verfolgung des Spaltgasdruckes in einer statistisch relevanten Anzahl von Standardbrennstäben über mehrere Einsatzzyklen benötigt, die möglichst im Kernkraftwerk selbst angewendet werden kann und vor allem den Wiedereinsatz der Brennstäbe nach der Messung ermöglicht.

Gemäss der Erfindung ist vorgesehen, dass das Xenon mit einer äusseren Strahlenquelle zu Röntgenfluoreszenz angeregt wird und dass die Röntgenfluoreszenzintensität mit einem Röntgenfluoreszenzanalysator als Mass für den Spaltgasgehalt gemessen wird.

Da das im sogenannten Plenum eines Brennstabes befindliche stabile Xenon den überwiegenden Teil des Spaltgases ausmacht und der Xenonanteil des Spaltgases in Abhängigkeit vom Stababbrand bekannt ist, steht die mittels einer Strahlenquelle aufgrund des Photoeffektes angeregte Röntgenfluoreszenzstrahlung in einer eindeutigen Beziehung zum Spaltgasgehalt. Die mit einem geeigneten Röntgenfluoreszenzanalysator gemessenen Intensitäten könnten somit auch auf einen Spaltgasdruck umgerechnet werden.

Als Strahlenquelle wird eine ringförmige Americium-241-Quelle verwendet, deren 60-KeV-Strahlung relativ gut das Hüllrohr des Stabes durchdringt und geeignet ist, die Kα-Strahlung des Xenons, welche auch zur Messung herangezogen wird, hinreichend anzuregen. Die Strahlenquelle umgibt dabei einen Teil des Stabplenums. Im darüberliegenden Teil des Plenums wird die Fluoreszenzstrahlung entweder mit einem wellenlängendispersiven (Einkanal-)Spektrometer oder mit einem Bohrlochdetektor energiedispersiv gemessen.

Gemäss der Erfindung ist eine zur Ausübung des erfindungsgemässen Verfahrens besonders geeignete Einrichtung vorgesehen, die so ausgebildet ist, dass eine köcherartige Abstützung für einen Brennstab mit einer ringförmigen Strahlenquelle versehen ist, die den Spaltgasraum des Brennstabes umschliesst, und dass die Abstützung einen der Strahlenquelle benachbarten Röntgenfluoreszenzanalysator trägt. Die köcherartige Abstützung kann zur Verbesserung der Kühlung während der Messung siebähnlich ausgeführt sein, bzw. aus Drahtnetzen hergestellt werden.

## Patentansprüche

1. Verfahren zur zerstörungsfreien Bestimmung des Spaltgasdruckes in Kernbrennstäben, bestehend aus einem an beiden Enden verschlossenen Hüllrohr und einer von diesem umschlossenen Brennstoffsäule, wobei am oberen Ende des Brennstabes ein Spaltgasraum vorhanden ist, der Xenon enthält, dadurch gekennzeichnet, dass das Xenon mit einer äusseren Strahlenquelle zu Röntgenfluoreszenz angeregt wird und dass die Röntgenfluoreszenzintensität mit einem Röntgenfluoreszenzanalysator als Mass für den Spaltgasdruck gemessen wird.

2. Verfahren nach Anspruch 1, dadurch gekennzeichnet, dass als Strahlenquelle Americium-241 verwendet wird.

3. Verfahren nach Anspruch 1 oder 2, dadurch gekennzeichnet, dass als Röntgenfluoreszenzanalysator ein wellenlängendispersives Spektrometer verwendet wird.

4. Verfahren nach Anspruch 1 oder 2, dadurch gekennzeichnet, dass als Röntgenfluoreszenzanalysator ein energiedispersiver Bohrlochdetektor verwendet wird.

5. Einrichtung zur Ausübung des Verfahrens nach einem der Ansprüche 1 bis 4, dadurch gekennzeichnet, dass eine köcherartige Abstützung für einen Brennstab mit einer ringförmigen Strahlenquelle versehen ist, die den Spaltgasraum des Brennstabes umschliesst, und dass die Abstützung einen der Strahlenquelle benachbarten Röntgenfluoreszenzanalysator trägt.

## Claims

1. A method of non-destructively measuring the fission gas pressure in nuclear fuel rods consisting of a tubular casing closed at both ends and a fuel column which is enclosed in said casing, a fission gas chamber containing xenon being arranged at the upper end of the fuel rod, characterised in that the xenon is stimulated to X-ray fluoresence by an external radiation source; and that the X-ray fluoresence intensity is measured by an X-ray fluoresence analyser as a measure of the fission gas pressure.

2. A method as claimed in claim 1, characterised in that Americium-241 is used as radiation source.

3. A method as claimed in claim 1 or claim 2, characterised in that a wave-length-dispersive spectrometer is used as X-ray fluoresence analyser.

4. A method as claimed in claim 1 or 2, characterised in that an energy-dispersive pin-hole detector is used as X-ray fluoresence analyser.

5. Apparatus for carrying out the method claimed in one of claims 1 to 4, characterised in that a boiler-like support for a fuel rod is provided with an annular radiation source which surrounds the fission gas chamber of the fuel rod; and that the support is provided with an X-ray fluoresence analyser which is adjacent to the radiation source.

## Revendications

1. Procédé de détermination non destructive de la pression de gaz de fission dans des crayons de combustible nucléaire, constitués d'un tube de gainage fermé aux deux extrémités, d'une colonne de combustible entourée par ce tube, une chambre destinée aux gaz de fission et qui renferme du xénon étant prévue à l'extrémité supérieure du crayon combustible, caractérisé en ce qu'il consiste à exciter le xénon en fluorescence X par une source extérieure de rayonnement et à mesurer, en tant que mesure de la pression des gaz de fission, l'intensité de fluorescence X par un analyseur de fluorescence X.

2. Procédé suivant la revendication 1, caractérisé en ce qu'il consiste à utiliser comme source de rayonnement de l'americium-241.

3. Procédé suivant la revendication 1 ou 2, caractérisé en ce qu'il consiste à utiliser, comme analyseur de fluorescence X, un spectromètre dispersif en fonction des longueurs d'ondes.

4. Procédé suivant la revendication 1 ou 2, caractérisé en ce qu'il consiste à utiliser, comme analyseur de fluorescence X, un détecteur à cavité dispersif en fonction de l'énergie.

5. Dispositif pour la mise en oeuvre du procédé suivant l'une des revendications 1 à 4, caractérisé en ce qu'il est muni d'un support en forme de carquois pour un crayon combustible, ayant une source annulaire de rayonnement qui entoure la chambre du crayon combustible réservé aux gaz de fission, et en ce que le support porte un analyseur de fluorescence X voisin de la source de rayonnement.